# EUROPEAN PATENT APPLICATION

(11) **EP 0 935 062 A2**
(43) Date of publication of application: **11.08.1999**
(21) Application number: 99101501.7
(22) Date of filing: 27.01.1999
(51) Int. Cl.: F02F 1/38

(54) **Diesel engine head with overhead inlet and exhaust valves**

(30) Priority: 04.02.1998 IT BO980055
(71) Applicant: Berti, Gian Alberto, 44100 Ferrara (IT)
(72) Inventor: Berti, Gian Alberto, 44100 Ferrara (IT)
(74) Representative: Modiano, Guido, Dr.-Ing.

(57) **Abstract**

A head (1) for a Diesel engine with overhead inlet and exhaust valves, comprising a base (2) which is meant to close the cylinder and is crossed by an inlet port (6) and by an exhaust port (5), wherein the ports (5, 6) have an annular shape and are substantially coaxial to an axis of the head (1).

## Description

The present invention relates to a Diesel engine head with overhead inlet and exhaust valves, particularly for two-stroke engines.

Two-stroke Diesel engines are known, although their use is limited; their operating cycle is composed of a compression and explosion stroke followed by an expansion and burnt-gas exhaust stroke. An adapted injector, operated by a pump, is used to inject the atomized fuel in the combustion chamber, while the stroke for expelling the combustion products and introducing air, called scavenging, is managed by means of the stroke of the piston, which opens and closes the inlet and exhaust ports for the gases. Such ports are normally formed in the rim of the cylinder and have a rather small surface

This system allows very simple operation, but in this way approximately 20% of the expansion stroke and an equal percentage of the compression stroke are dedicated to scavenging. Besides this, forming the scavenging ports in the liner of the cylinder poses considerable problems from the point of view of construction so much that two-stroke Diesel engines are very rarely commercially used, and the size of the ports is such that it is not possible to introduce large amounts of air into the cylinder.

As regards four-stroke engines, an overhead arrangement of the valves is very common; such valves usually have a rather small circular cross-section, and the impulses for opening the valves are transmitted by means of one or more camshafts which can be installed in the head or externally thereto.

The aim of the present invention is to obviate the drawbacks of conventional devices by providing a Diesel engine head which is provided with overhead inlet and exhaust valves having a large cross-section, adapted to be fitted to a cylinder having walls with no openings, and adapted to let a large inflow of air into the cylinder during scavenging.

Within the scope of this aim, an object of the present invention is to provide an engine head which is capable of adapting, with a small number of simple modifications, even to four-stroke or gasoline-fueled engines, and capable of working with a sufficiently low compression ratio and of being particularly quiet.

Another object of the present invention is to achieve the above aim with a structure which is simple, relatively easy to provide in practice, safe in use, effective in operation and having a relatively low cost.

This aim, these objects and others which will become more apparent hereinafter are all achieved by a head for a Diesel engine with overhead inlet and exhaust valves, comprising a base which is meant to close the cylinder and is crossed by an inlet port and by an exhaust port, characterized in that said inlet and exhaust ports have an annular shape and are substantially coaxial to a vertical axis of the head.

Further characteristics of the present invention will become more apparent from the detailed description of a preferred but not exclusive embodiment of a head for two-stroke Diesel engine with overhead inlet and exhaust valves according to the invention, illustrated only by way of non-limitative example in the accompanying drawings, wherein:

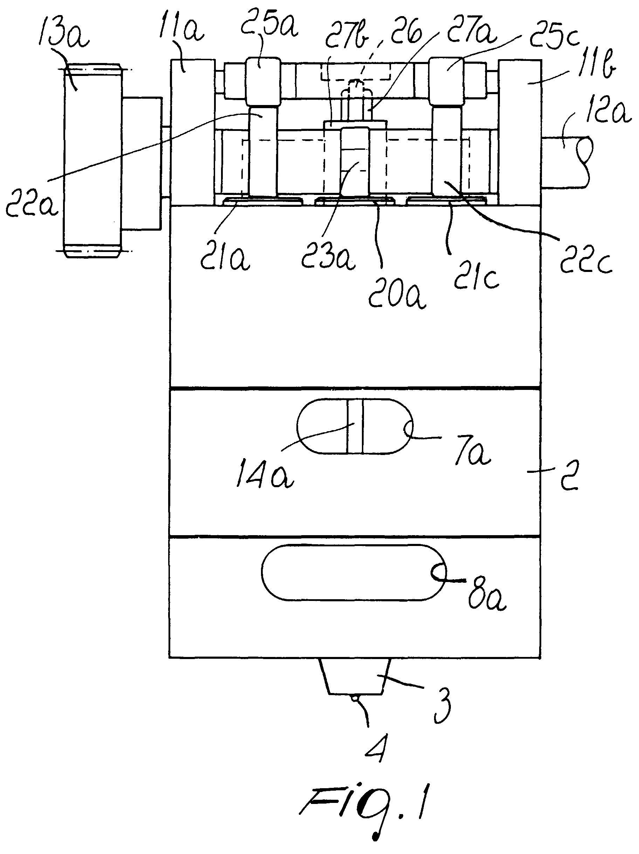

Figure 1 is a side view of the head for two-stroke Diesel engines with overhead inlet and exhaust valves according to the invention;
Figure 2 is a sectional top view of the head for a four-stroke Diesel engine;
Figure 3 is a sectional top view of the head for a two-stroke engine;
Figure 4 is a sectional side view, taken along a vertical plane, of the head of the invention provided with the upper end of the cylinder and of the piston;

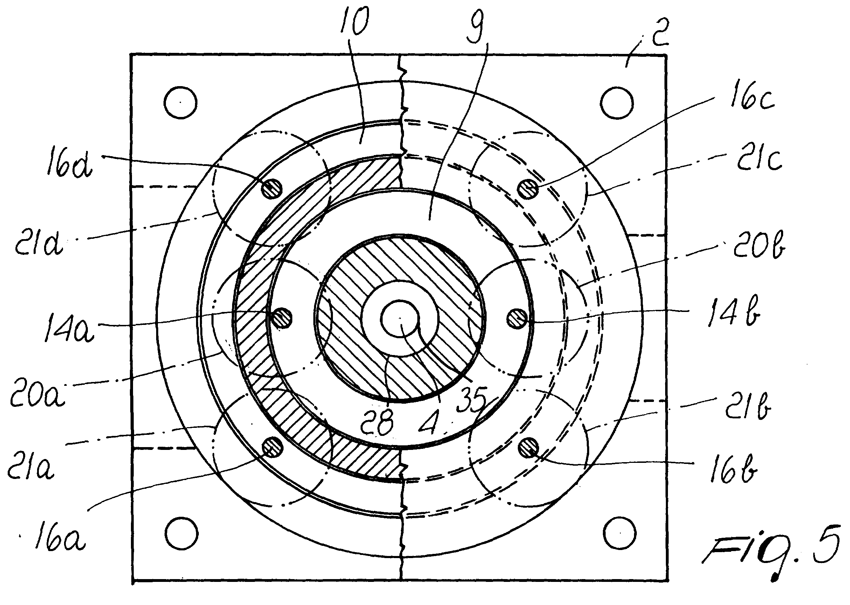

Figure 5 is a sectional top view, taken along the plane V-V of Figure 4.

With reference to the above Figures, the reference numeral 1 generally designates a head for a two-stroke Diesel engine with overhead inlet and exhaust valves according to the invention. The head comprises a block 2 which is substantially shaped like a parallelepiped and is advantageously obtained by casting metal alloys.

A frustum-shaped protrusion 3 protrudes downwards from the base of the block 2, is axially aligned with the cylinder and is internally provided with a seat for an injector 4.

Concentrically to the protrusion 3, in the block 2 there are two annular ports 5 and 6; the smaller inner one, 5, is meant to act as exhaust, while the larger outer one, 6, is meant to act as inlet. The ports 5 and 6 are connected to respective bell-shaped cavities 5a, 6a which are coaxial to the protrusion 3 and are formed in the block 2. The bell-shaped cavities 5a and 6a in turn open onto each one of two parallel sides of the block 1 with two respective mutually opposite exhaust and inlet openings 7a, 7b and 8a, 8b.

The ports 5 and 6 can be closed by two annular valves, an exhaust valve 9 and an inlet valve 10. Both the exhaust valve 9 and the inlet valve 10 have frustum-shaped inner and outer edges which are shaped complementarily to the ports that they close and respectively form inner and outer double seats, both of which are advantageously inclined at 45°.

Two front shoulders 11a and 11b are fixed in the upper part of the head, as a continuation of the faces of the block 2 that are not affected by the exhaust and inlet ports 7 and 8. Two camshafts 12a and 12b are rotatably mounted in the shoulders and are thus arranged on axes which are parallel to the sides of the block 2 onto which the openings 7 and 8 open.

At one end of the shafts 12, and externally to the block 2, there are gears 13a and 13b which are keyed symmetrically and mesh together so as to make the two shafts rotate in mutually opposite directions.

The valve 9 is rigidly coupled to two stems 14a and 14b which are perpendicular to the plane of the valve, are arranged at 180° with respect to each other and are fixed to the valve by screwing their threaded ends in respective threaded holes 15a and 15b.

In a similar manner, four stems 16a, 16b, 16c, 16d are fixed above the inlet valve 10 and are distributed symmetrically at 90° with respect to each other.

For the sake of simplicity, since the six stems 14, 16 have a similar structure and operation, hereinafter only the stem 14a is described in detail as regards the parts that are similar in all the stems.

The stem 14a passes vertically through the block 2 inside a respective guiding seat 18a until it reaches a cavity 17a which has a wider diameter and is located in the upper part of the block 2. The upper end of the stem 14a has a sort of mushroom-shaped part 141 which is rigidly coupled thereto and forms, in a downward region, an annular seat which accommodates one end of a helical compression spring 19. Spring 19 is mounted coaxially on the stem 14a and presses, with its other end, against the base of the respective cavity 17a.

The mushroom-shaped part 141 has, on its outer lateral surface, two mutually opposite upper flat regions which, during assembly, facilitate engagement with an adapted wrench for screwing in a threaded hole 15a formed in the exhaust valve 9; with its upper face, the mushroom-shaped part 141 is in contact with a cap-shaped tappet 20a which closes the upper opening of the cavity 17a.

Six tappets are provided and specifically tappets 20a, 20b and 21a, 21b, 21c, 21d, arranged in sets of three along the two axes of the shafts 12a and 12b, and a respective actuation cam is mounted on each shaft above each tappet.

The cams 22a, 22b, 22c, 22d act on the tappets 21a, 21b, 21c, 21d which actuate the opening of the inlet valve 10, while the cams 23a and 23b, which are respectively interposed on the two shafts between the cams 22a, 22b and 22c, 22d, actuate the tappets 20a, 20b which actuate the exhaust valve 9; the closure of the exhaust and inlet valves 9 and 10 is actuated by the helical compression springs 19.

A rocker 24 is pivoted between the shoulders 11a and 11b to a shaft 24a which is parallel to, and arranged above, the axes of the shafts 12. The rocker is meant to actuate a pump in axial alignment with the injector 4, and has a substantially T-like shape in plan view. The rocker forms, in a rear part of the shaft 24a, two forks 24c, 24d which lie above the shaft 12a and in which two rolling rollers 25a and 25c are pivoted so as to rotate with axes which are parallel to said shaft. The rollers rest rotatably on the respective cams 22a and 22c. The other front part 24e of the rocker 24 of the pump rests on a roller 26 which is mounted so that it can rotate by means of a pivot 26a at the upper fork-like end 27a of a tappet 27b which actuates an injection pump 28 in axial alignment with the injector 4.

The pump 28 is inserted in a respective vertical cylindrical cavity 29 formed at the center of the block 2 and has, according to the prior art, two rings 30 and 31 (which are coaxial to the pump 28 and are formed between three sealing rings which are known by the trade-name O-Ring and are designated by the reference numerals 32a, 32b and 32c) which are connected respectively to the exhaust duct 33 and inlet duct 34 through a series of radial perforations formed in their surface. A nozzle 35 is fixed to the lower end of the pump, passes through the frustum-shaped protrusion 3 and ends with the injector 4.

Inside the block 2, to the sides of the cavity 29 that contains the injection pump 28, there are additional cavities 36 inside which a cooling liquid can circulate during the operation of the motor.

The combustion chamber 37 is preferably spherical and is formed inside the piston top 38: a frustum-shaped opening of appropriate diameter is formed on the upper face of the piston and its oblique lateral wall 39 is parallel to the lateral surface of the protrusion, so that when the piston is in the top dead center the inlet of the combustion chamber 37 is closed almost hermetically by the protrusion 3, forming a choke for the forced passage of the gases.

The operation of the head according to the invention is as follows. During the descent of the piston, the inlet and exhaust valves 10, 9 are open, allowing to expel the burnt gases and to draw air (cylinder scavenging). When the piston begins its upward movement, approximately 20° after the lower dead center, the exhaust valve 9 closes, while the inlet valve 10 remains open to approximately 30° or more, when it too closes.

The upward movement of the piston compresses the air inside the cylinder and consequently increases the temperature. Proximate to the top dead center, the frustum-shaped protrusion 3 enters the upper opening of the combustion chamber 37 and the particular complementary configuration of the contour 39 of the opening and of the protrusion 3 determines, due to the known Venturi effect, a further increase in the temperature inside the combustion chamber.

This further temperature increase allows to ignite the fuel with a rather low compression ratio of approximately 16:1.

Substantially when the piston reaches the upper limit of its stroke (top dead center), the fuel is injected, generating the explosion, whose expansion pressure causes the descent of the piston accompanied by the opening of the valves and by the beginning of the scavenging step.

The opening of the valves 9 and 10 is actuated by the two contrarotating overhead distribution camshafts 12a, 12b: the cams 22 act simultaneously on the four tappets 21 for actuating the stems connected to the inlet valve 10, provided with a larger diameter, while the cams 23 act simultaneously on the two tappets 20 related to the stems that are fixed to the exhaust valve 9, having a smaller diameter, so as to move the valves parallel to themselves.

The cams 22a and 22c also synchronously actuate the injection pump by acting on the rollers 25a and 25c of the rocker 24 of the pump.

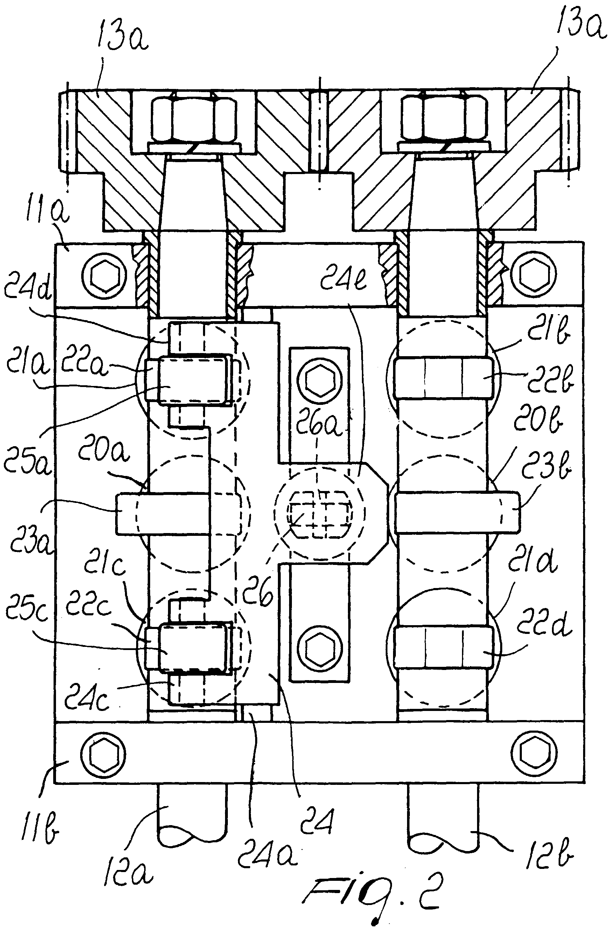

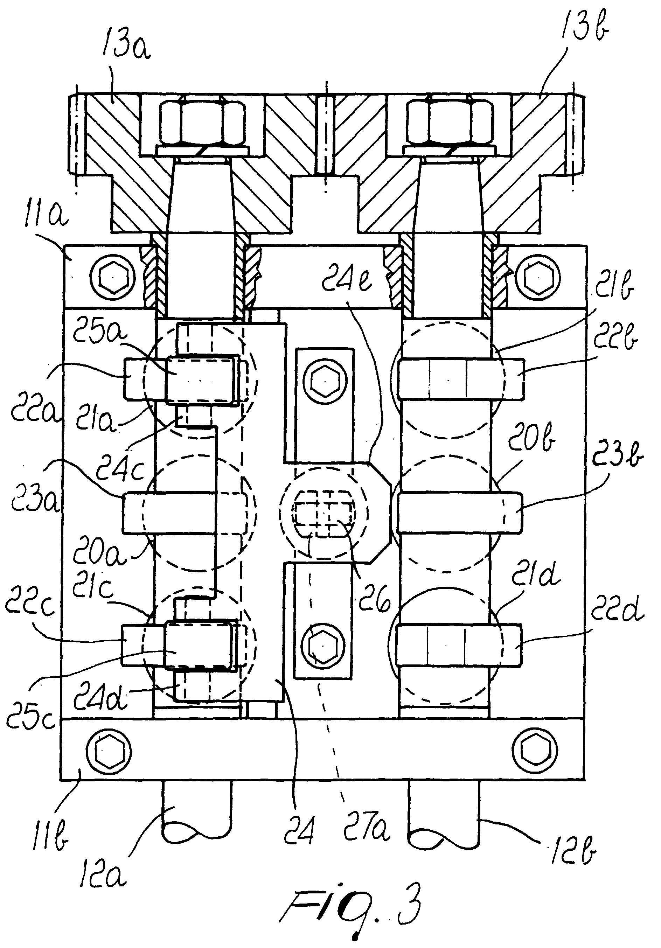

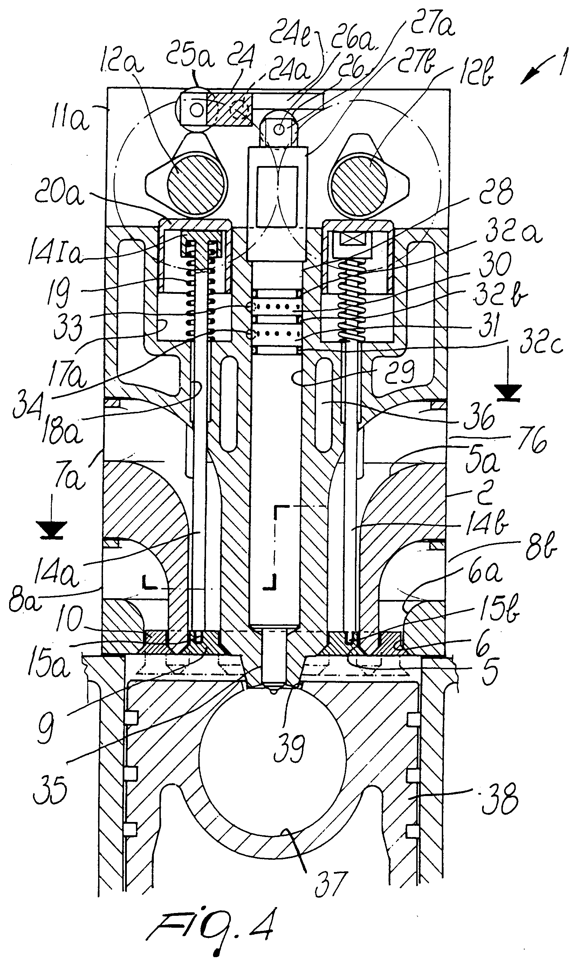

Conveniently, in the case of a two-stroke engine the cams are mutually aligned on their respective shafts, see Figure 3, while in the case of a four-stroke engine, see Figures 2 and 4, the two cams related to the exhaust valve 9 are offset with respect to the other four cams of the inlet valve 10, so as to allow the correct valve opening and closure sequence required by this kind of engine.

In order to adapt the head according to the invention to a gasoline-fueled engine it is necessary to place a spark-plug instead of the injection pump and substantially in the same position.

Advantageously, the connection of the exhaust and inlet ports to two openings 7 and to two openings 8 on the two mutually opposite sides of the block 2 allows to add a series of devices meant to improve the overall performance of the engine. In particular, it is possible to apply a positive-displacement supercharger for low and medium rpm rates to one inlet port and a turbocharger for higher rpm rates to the other inlet port. It can be advantageous to apply a blower to one of the exhaust ports, allowing better cooling of the hottest part of the head and therefore allowing to eliminate the liquid-based cooling circuit.

Advantageously, if a head for multicylinder engines is to be provided, the cylinders are mutually aligned so that the two distribution camshafts 12a and 12b lie above all of the head, so that the pairs of lateral openings 7 and 8 of the various cylinders are aligned and arranged side by side to be connected to two inlet ducts and to two exhaust ducts which are arranged laterally and longitudinally and so that the various cylinders affect a lower longitudinal crankshaft which is parallel to the distribution shafts 12. Any cavities 36 for circulating the liquid for cooling the various cylinders are also mutually aligned and connected.

It has thus been observed that the invention achieves the intended aim and objects.

The invention thus conceived is susceptible of numerous modifications and variations, all of which are within the scope of the inventive concept.

All the details may furthermore be replaced with other technically equivalent elements.

In practice, the materials used, as well as the shapes and the dimensions, may be any according to the requirements without thereby abandoning the protective scope of the claims that follow.

The disclosures in Italian Patent Application No. BO98A000055 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A head for a Diesel engine with overhead inlet and exhaust valves, comprising a base which is meant to close the cylinder and is crossed by an inlet port and by an exhaust port, characterized in that said ports have an annular shape and are substantially coaxial to an axis of the head.

2. The head according to claim 1, characterized in that said inlet port and said exhaust port are connected to respective bell-shaped cavities formed in said head, each cavity leading to two inlet openings and two exhaust openings located on two parallel sides of said head.

3. The head according to claim 2, characterized in that said ports are closed by respective valves having a profile complementary to a profile of the ports, each valve having a double external and internal seat.

4. The head according to claim 3, characterized in that a larger-diameter valve of said inlet and exhaust valves is rigidly coupled to four stems which are distributed at 90° to each other and are actuated by a corresponding number of tappets, and in that a smaller-diameter valve of said inlet and exhaust valves is rigidly coupled to two stems which are arranged at 180° to each other and are actuated by two tappets, said stems being slidingly mounted in respective vertical guiding seats formed in the head.

5. The head according to claim 4, characterized in that said stems are substantially aligned in sets of three on two planes which are parallel to the sides of the head in which said inlet and exhaust openings are formed.

6. The head according to claim 5, characterized in that two shafts are rotatably mounted in said head in positions which are substantially co-planar to the planes of said tappets, three cams for the actuation of said tappets being keyed on each one of said shafts.

7. The head according to claim 6, characterized in that said three cams are mutually aligned for a two-stroke engine.

8. The head according to claim 6, characterized in that said two cams that act on the inlet valve are offset with respect to the cam that acts on the exhaust valve for a four-stroke engine.

9. The head according to claim 1, characterized in that a frustum-shaped protrusion protrudes from the center of said base, a fuel injector being mounted at the center of said protrusion, said protrusion being shaped complementarily to an inlet of a combustion chamber formed in a piston.
